# EUROPÄISCHE PATENTSCHRIFT

(11) **EP 3 068 575 B1**
(45) Veröffentlichungstag und Bekanntmachung des Hinweises auf die Patenterteilung: **08.11.2017**
(21) Anmeldenummer: 15703563.5
(22) Anmeldetag: 05.02.2015
(51) Int. Cl.: B23K 26/04, B23K 26/06, B23K 26/14, B23K 26/30, G02B 7/04

(54) **LASERBEARBEITUNGSKOPF MIT EINEM BANDANTRIEB ZUR VERSCHIEBUNG EINER OPTIK**
LASER MACHINING HEAD COMPRISING A BELT DRIVE FOR MOVING AN OPTICS
TÊTE D'USINAGE LASER POURVUE D'UN ENTRAÎNEMENT À BANDE CONÇU POUR DÉPLACER UN SYSTÈME OPTIQUE

(30) Priorität: 06.02.2014 DE 102014101477
(43) Veröffentlichungstag der Anmeldung: 21.09.2016
(73) Patentinhaber: Precitec GmbH & CO. KG, 76571 Gaggenau-Bad Rotenfels (DE)
(72) Erfinder: SPÖRL, Georg, 76287 Rheinstetten (DE); LOOSE, Christian, 76571 Gaggenau (DE)
(74) Vertreter: Ter Meer Steinmeister & Partner
(86) Internationale Anmeldenummer: PCT/EP2015/052456
(87) Internationale Veröffentlichungsnummer: WO 2015/118088

(56) Entgegenhaltungen:
- DE-A1- 19 622 413
- JP-A- S6 321 617
- US-A- 2 706 913
- US-A- 4 366 722

## Beschreibung

Die Erfindung betrifft einen Laserbearbeitungskopf, in dem eine strahlformende Optik, insbesondere eine Fokussieroptik, eine Kollimatoroptik oder Zoom-Optik verschieb- oder verstellbar gehalten ist, siehe den Oberbegriff des Anspruchs 1 (siehe z.B. DE 196 22 413). Bei der Bearbeitung eines Werkstücks mittels eines Laserbearbeitungskopfes, insbesondere beim Laserschneiden oder -schweißen, wird üblicherweise ein Laserbearbeitungskopf mit einem Gehäuse vorgesehen, in dem eine Fokussieroptik, eine Kollimatoroptik Zoom-Optik oder angeordnet sind. Ein durch den Laserbearbeitungskopf zu einer Schneiddüse hindurchlaufender Laserstrahl wird durch eine Fokussieroptik so fokussiert, dass ein Werkstück bearbeitet werden kann. Die Optik zur Formung des Laserstrahls ist dabei so im Laserbearbeitungskopf gehalten, dass die Optik relativ zum Gehäuse des Laserbearbeitungskopfes verstellbar ist. Dabei kann die Optik einerseits in einer Ebene senkrecht zum Laserstrahl und andererseits in Längsrichtung des Laserstrahls eingestellt werden.

Aus der DE 295 07 189 U1 ist ein Anschlusskopf zur Bearbeitung eines Werkstücks mittels eines Laserstrahls bekannt, bei dem die Fokussieroptik für den Laserstrahl an einem Einschub, der in das Gehäuse des Anschlusskopfes einführbar ist, verstellbar gehalten ist. Zur Verstellung der Optik in Richtung ihrer Längsachse ist dabei ein manueller Antrieb vorgesehen, der wie ein Spindelantrieb arbeitet.

Aus der DE 196 22 413 ist als Verstellantrieb zum Positionieren einer Optik in einem Laserbearbeitungskopf ein Seilantrieb bekannt. Hierbei ist es nachteilig, dass auch bei einem Seildurchmesser von nur ca. 1 mm und Biegeradien von ca. 20 mm innerhalb des Seils Abrieb durch Reibung zwischen den einzelnen Drähten entsteht. Dadurch kann das Innere eines Bearbeitungskopfes und insbesondere die Optik(en) darin verschmutzt werden.

Um das Problem einer Verschmutzung der Optik in bekannten Laserbearbeitungsköpfen zu umgehen, das durch Abrieb und/oder Schmiermittel hervorgerufen wird, wenn eine Verstellung der Optik nach dem Spindelprinzip oder mittels einem Seilantrieb erfolgt, ist es bereits bekannt eine Verstelleinrichtung für die Optik vorzusehen, die einen Linearmotor mit berührungsfreiem Antrieb aufweist.

Eine Verstell- oder Antriebseinrichtung mit derartiger Linearmotor mit berührungsfreiem Antrieb (Direktantrieb) ist aus dem deutschen Gebrauchsmuster DE 20 2009 012 924U1 bekannt.

Nachteilig ist hier, dass die Optik in unerwünschter Weise bewegt und somit die Fokuslage verschoben werden kann, wenn von außen große Beschleunigungen auf den Direktantrieb einwirken, da dann Trägheitskräfte auftreten können, die größer als die magnetische Haltekraft sein können. Soll dieser Effekt vermieden werden, kann entweder eine Bremse oder ein Direktantrieb mit einer größeren Dimensionierung eingebaut werden. Dieses Vorgehen widerspricht einer kleinen Baugröße und möglichst niedrigen Kosten.

Aus der DE 43 17 384 A1 ist ein Laserbearbeitungskopf bekannt, dessen strahlformende Optik in Längsrichtung des Laserstrahls von einem Schneckenantrieb verschiebbar ist. Diese Art des Antriebs ist allerdings bekanntermaßen träge und aufgrund des unwillkürlichen Spiels des Schneckenantriebs verhältnismäßig ungenau.

Die US 5 546 238 A betrifft eine Zoomoptik mit Hochgeschwindigkeitslinsenantrieb und zeigt zur Verschiebung der Optik einen Bandantrieb mit einem umlaufenden Band, das über zwei Walzen geführt ist. Die einzelnen Linsengruppen der Optik können über piezoelektrische Klemmen wahlweise mit dem umlaufenden Band zur Verschiebung gekoppelt werden. Hier ist das Band über die antreibenden Walzen reibschlüssig geführt.

Die DE 196 28 857 A1 betrifft einen Anschlusskopf zur Bearbeitung eines Werkstücks mittels eines Laserstrahls, dessen strahlformende Optik ist in einer Kassette angeordnet, die in eine Trägereinheit im Laserbearbeitungskopf einsetzbar ist. Zur Verschiebung der Trägereinheit in Richtung der optischen Achse ist ein elektrisch angetriebener Getriebemotor vorgesehen, dessen Motorwelle parallel zur optischen Achse verläuft. Auf der Motorwelle sitzt ein Antriebsrad für einen Zahnriemen, der um ein weiteres Antriebsrad herumgelegt ist, das fest auf einer Spindel sitzt, um diese zu drehen, wenn sich der Motor dreht. Zur Verschiebung der Trägereinheit wirkt die Spindel mit einer Spindelmutter zusammen, die fest an der Seite der Trägereinheit angebracht ist.

Die JP 63 021 617 A betrifft eine Autofokusvorrichtung für eine Kamera, die zum verstellen der Abstände zwischen dem Kameraobjektiv und dem Bildsensor ein Stellglied mit einem Bandantrieb aufweist.

Die US 4,366,722 A zeigt einen Bandantrieb für einen magnetischen Schreib-Lesekopf in einem magnetischen Festplattensystem für elektronische Datenverarbeitungssysteme.

US 2,706,913 A zeigt den Einsatz von Bändern beim Umsetzen einer translatorischen Bewegung in eine rotatorische Bewegung und umgekehrt, wie sie bei Präzisionsinstrumenten erforderlich ist, um beispielsweise den Objekttisch eines Mikroskops gegen das Objektiv zu verschieben

Somit liegt der Erfindung die Aufgabe zugrunde, einen Laserbearbeitungskopf mit einer darin verstellbar gehaltenen Optik zu schaffen, bei denen eine Verschmutzung der Optik weitgehend vermieden und die Optik in ihrer eingestellten Lage sicher gehalten werden kann, selbst wenn große Trägheitskräfte in Folge von großen Beschleunigungen auftreten.

Diese Aufgabe wird durch den Laserbearbeitungskopf nach Anspruch 1 gelöst.

Erfindungsgemäß weist also ein Laserbearbeitungskopf zur Halterung und Verstellung einer strahlformenden Optik, wie einer Fokussieroptik zur Fokussierung eines Laserstrahls auf eine Werkstück, einer Kollimatoroptik, die in Längsrichtung des Laserstrahls verschiebbar am Einschub gelagert ist, oder einer Zoom-Optik einen Bandantrieb auf, mit dem die strahlformende Optik präzise verschoben werden kann und der die strahlformende Optik in der eingestellten Position auch dann sicher hält, wenn in Folge von schnellen Bewegungen und Geschwindigkeitsänderungen des Laserbearbeitungskopfes große Trägheitskräfte auftreten. Der erfindungsgemäß vorgesehene Bandantrieb hat den Vorteil, dass bei der Verschiebung der Optik im Bandantrieb keine Gleitreibung auftritt, die zu Abrieb führen könnte, sondern ausschließlich Wälzreibung, so das Verschmutzungen, wie sie beim Stand der Technik auftreten können, vermieden werden.

Um eine automatische Einstellung auch während der Laserbearbeitung zu ermöglichen, ist gemäß der Erfindung vorgesehen, dass der Bandantrieb eine an der Halterung drehbar gelagerte Bandtrommel aufweist, die von einem Motor, insbesondere von einem bürstenlosen Gleichstrommotor oder einem Schrittmotor antreibbar ist.

Um eine sichere Führung der Optik bei der Verschiebung relativ zum Einschub zu gewährleisten, ist vorteilhafterweise vorgesehen, dass die Optik an einem an der Halterung in Längsrichtung des Laserstrahls verschiebbar gelagerten Schlitten gehalten ist, der zwei in Bewegungsrichtung voneinander beabstandete Enden aufweist, ein erstes Band mit seinem einen Ende an dem einem Ende des Schlittens befestigt ist und mit seinem anderen Ende um die Bandtrommel gewickelt und an dieser befestigt ist, und ein zweites Band mit seinem einen Ende an dem anderen Ende des Schlittens befestigt ist und mit seinem anderen Ende um die Bandtrommel gewickelt und an dieser befestigt ist.

Vorteilhafterweise sind das erste und das zweite Band in Axialrichtung der Trommel gesehen nebeneinander um die Bandtrommel gewickelt, wobei ein erstes Band zwischen zwei zweiten Bändern angeordnet ist. Dabei ist zweckmäßigerweise die Summe der Breiten der zwei zweiten Bänder gleich oder größer als die Breite des ersten Bandes, wobei die beiden zweiten Bänder gleich breit sind.

Durch die spezielle Anordnung der Bänder auf der Bandtrommel lässt sich die Rotationsbewegung der Bandtrommel über die Bänder in eine präzise Linearverschiebung des vom Bandantrieb angetriebenen Schlittens umsetzen, da sich die von den Bändern auf die Bandtrommel übertragenen Kräfte gegenseitig aufheben.

Um die Beanspruchung der Bänder beim Verschieben des Schlittens zur Einstellung der Optik möglichst gering zu halten, ist gemäß der Erfindung vorgesehen, dass das Verhältnis von Banddicke zum Bandtrommelradius kleiner als 0,05, vorzugsweise kleiner als 0,03, insbesondere kleiner als 0,01 ist.

Um einen zuverlässigen Betrieb und lange Standzeiten des Bandantriebs zu gewährleisten, ist zweckmäßigerweise vorgesehen, dass die ersten und zweiten Bänder die gleiche Dicke aufweisen, die im Bereich von 0,1 mm bis 0,01 mm, vorzugsweise von 0,08 mm bis 0,02 mm insbesondere von 0,06 mm bis 0,04 mm liegt.

Vorteilhafterweise bestehen die ersten und zweiten Bänder aus Stahl, insbesondere Federstahl oder dergleichen. Die ersten und zweiten Bänder können auch als erste und zweite Bandabschnitte eines einstückigen Bandes ausgebildet sein.

Ferner ist es zweckmäßig, die Halterung zur Lagerung der in Längsrichtung des Laserstrahls verschiebbaren Optik an einem Einschub gehalten ist, der in den Laserbearbeitungskopf einsetzbar ist. Hierdurch lässt sich ein schneller und einfacher Austausch der Optik ermöglichen, wenn dies wegen eines Brennweitenwechsels oder einer Beschädigung der Optik erforderlich wird.

Die Erfindung wird im Folgenden beispielsweise anhand der Zeichnung weiter erläutert. Es zeigen:
Figur 1 eine vereinfachte schematische Blockdarstellung eines erfindungsgemäßen Laserbearbeitungskopfes,
Figur 2 eine vereinfachte schematische Seitenansicht eines Einschubs zur verstellbaren Halterung einer Optik in dem erfindungsgemäßen Laserbearbeitungskopf, und
Figur 3 eine vereinfachte schematische Draufsicht auf den Verstellmechanismus für die Optik,
Figur 4a eine perspektivische Ansicht eines einstückigen Bandes für einen Bandantrieb des Verstellmechanismus, und
Figur 4b eine perspektivische Ansicht des Bandes nach Figur 4a im aufgewickelten Monatagezustand.

In den verschiedenen Figuren der Zeichnung sind einander entsprechende Bauelemente mit gleichem Bezugszeichen versehen.

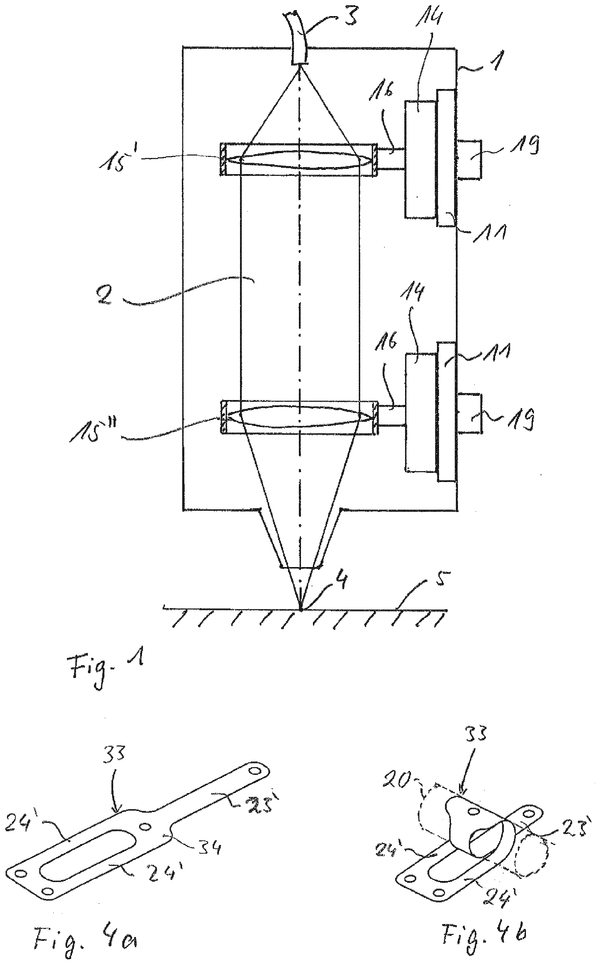

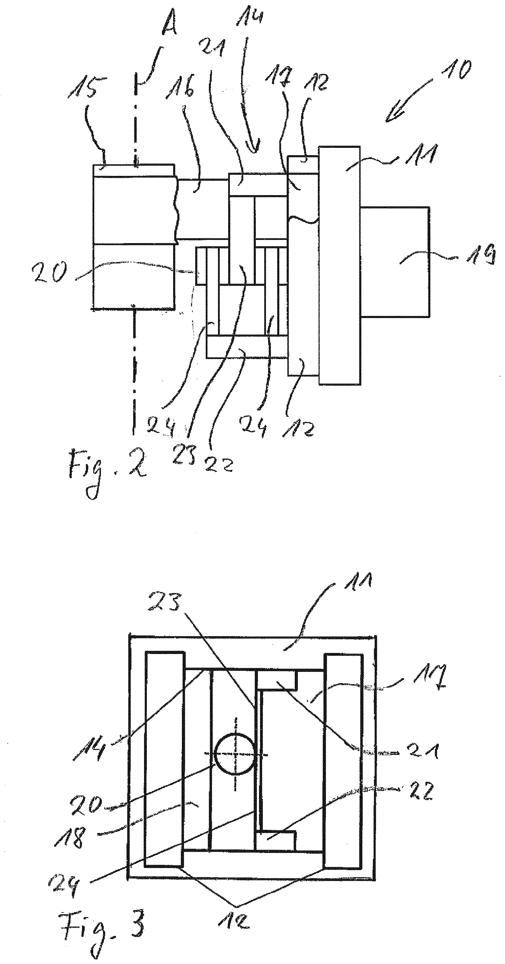

Wie in Figur 1 dargestellt ist, weist ein erfindungsgemäßer Laserbearbeitungskopf ein Gehäuse 1 auf, durch das ein Laserstrahl 2 geführt ist. Zur Formung des aus einer Lichtleitfaser 3 austretenden Laserstrahls 2 sind beispielsweise eine erste Optik 15', die als Kollimatoroptik ausgebildet ist, und eine zweite Optik 15" vorgesehen, die als Fokussieroptik den Laserstrahl 2 in den Wechselwirkungsbereich 4 zwischen Laserstrahl 2 und Werkstück 5 fokussiert. Zur verstellbaren Halterung der Optiken 15', 15" sind diese jeweils über einen Halter 16 an einem Schlitten 14 eines Bandantriebs befestigt, der von einem Motor 19 antreibbar und an einer Halterung 11 verschiebbar geführt ist. Die Halterung 11 kann, wie in Figur 1 dargestellt, unmittelbar im Gehäuse 1 des Laserbearbeitungskopfes befestigt sein. Es ist aber auch möglich, die Halterung 11 - wie in Figur 2 gezeigt - an einem Einschub 10 vorzusehen, der in den Laserbearbeitungskopf einsetzbar ist.

Anstelle der in Figur 1 dargestellten Kollimator- und Fokussieroptiken kann zur Strahlformung jedoch auch eine Zoomoptik eingesetzt werden, mit der nicht nur die Fokuslage, sondern auch die Brennweite verändert werden kann.

Wie in Figur 2 dargestellt ist, weist der Einschub 10, der in den Laserbearbeitungskopf einführbar ist, die Halterung 11 auf, die als am Gehäuse 1 des Laserbearbeitungskopfes befestigbare Halteplatte ausgebildet ist. An der Halterung 11 sind Führungsschienen 12 für den Schlitten 14 vorgesehen, an dem eine Optik 15 gehalten ist. Die Optik 15 kann dabei wie erwähnt eine Kollimatoroptik zur Aufweitung und Kollimierung, also zur Erzeugung eines aufgeweiteten parallelen Laserstrahls oder eine Fokussieroptik sein, die den Laserstrahl 2 zum Schneiden, Schweißen, Löten, Pulverauftragsschweißen oder dergleichen auf ein zu bearbeitendes Werkstück 5 fokussiert. Die Optik 15 ist, wie in Figur 1 und 2 schematisch angedeutet, über den Halter 16 am Schlitten 14 befestigt, der beispielsweise als Haltemanschette oder dergleichen ausgebildet sein kann. Der Schlitten 14 weist eine erste und eine zweite an jeweiligen Führungsschienen 12 an der Halterung 11 geführte Schlittenschienen 17, 18 auf, die so ausgebildet sind, dass eine von einem Motor 19 angetriebene Bandtrommel 20, die ortsfest an der Halterung 11 angeordnet ist, ungehindert durch den Schlitten 14 hindurch ragen kann, so dass sich die Bandtrommel 20 und der Schlitten 14 nicht gegenseitig im Wege sind. An einer der Schlittenschienen, im dargestellten Ausführungsbeispiel an der ersten Schlittenschiene 17 sind erste und zweite Bandhalter 21, 22 angebracht, an denen erste und zweite Bänder 23, 24 mit ihren einen Enden befestigt sind, während ihre jeweils anderen Enden um die Bandtrommel 20 herumgewickelt und an dieser befestigt sind. Genauer gesagt, ist das erste Band 23 mit seinem einen Ende, dem in der Figur 1 oberen Ende über den Bandhalter 21 an einem Ende des Schlittens 14 befestigt, während es mit seinem unteren Ende im Uhrzeigersinn um die Bandtrommel 20 gewickelt und an dieser befestigt ist. Das zweite Band, das als zwei zweite Bänder 24 ausgebildet ist, ist mit seinem in der Zeichnung unteren Ende über den Bandhalter 22 mit dem anderen Ende des Schlittens 14 verbunden, während sein oberes Ende, also die oberen Enden der beiden zweiten Bänder 24 im Gegenuhrzeigersinn um die Trommel 20 herumgeführt und an dieser befestigt sind. Die ersten und zweiten Bänder 23, 24, sind so nebeneinander angeordnet, dass die beiden zweiten Bänder 24 auf beiden Seiten des ersten Bandes 23 liegen. Die ersten und zweiten Bänder 23, 24 bilden dabei gemeinsam eine Bandschleife, die um die Trommel 20 herum geführt ist.

Wie in Figur 4a gezeigt ist, können anstelle des ersten Bandes und der zweiten Bänder ein erster Bandabschnitt 23' und zwei zweite Bandabschnitte 24' eines einstückigen Bandes 33 verwendet werden. Die ersten und zweiten Bandabschnitte 23', 24' treffen sich in der Mitte des Bandes 33 und bilden einen gabelförmigen Abschnitt 34 mit dem das Band 33 auf der Trommel 20 befestigt wird, wie in Figur 4b angedeutet.

Die Bänder 23, 24; 33 für den Bandantrieb, also die Zugmittel, die die Antriebskraft der Trommel 20 auf den Schlitten 14 übertragen, weisen ein Verhältnis von Breite zu Dicke auf, das größer als 50, vorzugsweise größer als 80 ist. Die Bänder bestehen dabei aus Stahl, vorzugsweise Federstahl und besitzen eine Dicke, die im Bereich von 0,1 mm bis 0,01 mm, vorzugsweise von 0,08 mm bis 0,02 mmm, insbesondere bei 0,05 mm liegt.

Die Banddicke und der Trommeldurchmesser sind gemäß der Erfindung jeweils so zu wählen, dass das Verhältnis von Banddicke zum Bandtrommelradius kleiner als 0,05, vorzugsweise kleiner als 0,03, insbesondere kleiner als 0,01 ist. Nimmt man beispielsweise einen Trommeldurchmesser von 12 mm entsprechend einem Trommelradius von 6 mm an, so ergibt sich bei der Banddicke von 0,05 mm ein Verhältnis von Banddicke zu Biegeradius von 0,0083.

Wird nun die Trommel vom Motor 19, der beispielsweise ein bürstenloser Gleichstrommotor oder ein Schrittmotor sein kann, in Figur 2 im Uhrzeigersinn gedreht, so wird das erste Band 23 oder der erste Bandabschnitt 23' aufgewickelt, während das zweite Band, also die zweiten Bänder 24 oder die zweiten Bandabschnitte 24' abgewickelt werden, so dass sich der Schlitten 14 in der Zeichnung nach unten bewegt. Umgekehrt wird der Schlitten 14 nach oben bewegt, wenn sich die Bandtrommel 20 im Gegenuhrzeigersinn dreht.

Hierbei wird die Position der Optik 15 durch einen nicht näher dargestellten Linearmaßstab gemessen. Ein entsprechendes Positionssignal wird an einen Motorregler weitergeleitet, der dafür sorgt, dass die Optik 15 an der gewünschten Stelle positioniert wird.

Der Motor 19 ist dabei so auszulegen, dass sein Drehmoment größer ist als die zu bewegende Masse mal dem Radius der Bandtrommel 20. Ein derartiger Motor 19 ist dann auch in der Lage, die Optik 15 in ihrer gewünschten Stellung zu halten, wenn die von außen wirkenden Kräfte durch Beschleunigungen bewirkt werden, die bis zum sechsfachen der Erdbeschleunigung betragen. Je nach Richtung der Beschleunigung wirkt noch zusätzlich die Gewichtskraft der durch den Bandantrieb zu bewegenden Masse.

Durch den Einsatz eines Bandantriebs lässt sich die Optik 15 also in Richtung ihrer optischen Achse A relativ zur Halterung 11 des Einschubs 10 zwischen den Führungsschienen 12 hin und her verschieben, um ihre Position im Laserbearbeitungskopf in gewünschter Weise einzustellen. Im Falle einer Kollimatorlinse wird die Optik 15 so verschoben, dass die Austrittsfläche einer Lichtleitfaser, die das Laserlicht liefert, mit dem gegenstandsseitigen Fokus der Kollimatoroptik zusammenfällt, um die Austrittsfläche nach Unendlich abzubilden, um also einen aufgeweiteten parallelen Laserstrahl zu erhalten. Im Falle einer Fokussierlinse wird die Optik 15 so verschoben, dass der Laserfokus die gewünschte Lage zur Werkstückoberfläche aufweist. Treten insbesondere bei einer Fokussieroptik Verschiebungen des Brennpunktes wegen Erwärmung der Linse auf, so kann die Optik 15 über den vom Motor 19 getriebenen Bandantrieb nachgeführt werden, ohne dass der Arbeitsprozess wesentlich unterbrochen zu werden braucht.

Ein wesentlicher Vorteil des erfindungsgemäß eingesetzten Bandantriebs ist, dass das Verhältnis der Zugmitteldicke, also der Dicke der Bänder zum Biegeradius verkleinert und damit verbessert werden kann. Damit lässt sich auch die Beanspruchung der unter Zugspannung stehenden Bänder durch Auf- und Abwickeln verringern. Da innerhalb der Bänder kein dem Seil ähnlicher Verschleißmechanismus auftritt, besteht auch keine Gefahr der Verschmutzung der Linsen im Laserbearbeitungskopf. Ferner ist es wesentlich, dass zwischen den Bändern und der Bandtrommel keinerlei Gleitreibung, sondern nur Wälzreibung auftritt, die praktisch abriebfrei ist.

## Patentansprüche

1. Laserbearbeitungskopf zur Bearbeitung eines Werkstücks mit einem Laserstrahl, mit einer Halterung (11), einer strahlformenden Optik (15), die an der Halterung (11) in Längsrichtung des Laserstrahls verschiebbar gelagert ist, **gekennzeichnet durch** einen Bandantrieb (33) zur Verschiebung der Optik (15), der eine an der Halterung (11) drehbar gelagerte Bandtrommel (20) aufweist, die von einem Motor (19) antreibbar ist, wobei das Verhältnis von Banddicke zum Bandtrommelradius kleiner als 0.05 ist.

2. Laserbearbeitungskopf nach Anspruch 1, **dadurch gekennzeichnet, dass** der Motor (19) ein bürstenloser Gleichstrommotor oder ein Schrittmotor ist.

3. Laserbearbeitungskopf nach Anspruch 1 oder 2, **dadurch gekennzeichnet, dass** das Verhältnis von Banddicke zum Bandtrommelradius kleiner als 0,03, insbesondere kleiner als 0,01 ist.

4. Laserbearbeitungskopf nach Anspruch 1, 2 oder 3, **dadurch gekennzeichnet, dass**
- die Optik (15) an einem an der Halterung (11) in Längsrichtung des Laserstrahls verschiebbar gelagerten Schlitten gehalten ist, der zwei in Bewegungsrichtung voneinander beabstandete Enden aufweist,
- ein erstes Band (23) mit seinem einen Ende an dem einem Ende des Schlittens (14) befestigt ist und mit seinem anderen Ende um die Bandtrommel (20) gewickelt und an dieser befestigt ist, und ein zweites Band (24) mit seinem einen Ende an dem anderen Ende des Schlittens (14) befestigt ist und mit seinem anderen Ende um die Bandtrommel (20) gewickelt und an dieser befestigt ist.

5. Laserbearbeitungskopf nach Anspruch 4 **dadurch gekennzeichnet, dass** das erste und das zweite Band (23, 24) in Axialrichtung der Trommel gesehen nebeneinander um die Bandtrommel (20) gewickelt sind.

6. Laserbearbeitungskopf nach Anspruch 4 oder 5, **dadurch gekennzeichnet, dass** ein erstes Band (23) zwischen zwei zweiten Bändern (24) angeordnet ist.

7. Laserbearbeitungskopf nach Anspruch 6, **dadurch gekennzeichnet, dass** die Summe der Breiten der zwei zweiten Bänder (24) gleich der oder größer als die Breite des ersten Bandes (23) ist.

8. Laserbearbeitungskopf nach Anspruch 6 oder 7, **dadurch gekennzeichnet, dass** die beiden zweiten Bänder (24) gleich breit sind.

9. Laserbearbeitungskopf nach einem der Ansprüche 1 bis 8, **dadurch gekennzeichnet, dass** die ersten und zweiten Bänder (23, 24) die gleiche Dicke aufweisen, die im Bereich von 0,1 mm bis 0,01 mm, vorzugsweise von 0,08 mm bis 0,02 mm, insbesondere von 0,06 mm bis 0,04 mm liegt.

10. Laserbearbeitungskopf nach einem der vorstehenden Ansprüche, **dadurch gekennzeichnet, dass** die ersten und zweiten Bänder (23, 24) aus Stahl, insbesondere Federstahl oder dergleichen bestehen.

11. Laserbearbeitungskopf nach einem der vorstehenden Ansprüche, **dadurch gekennzeichnet, dass** die ersten und zweiten Bänder (23, 24) als erste und zweite Bandabschnitte (23', 24') eines einstückigen Bandes (33) ausgebildet sind.

12. Laserbearbeitungskopf nach einem der vorstehenden Ansprüche, **dadurch gekennzeichnet, dass** die Halterung (11) zur Lagerung der in Längsrichtung des Laserstrahls verschiebbaren Optik (15) an einem Einschub (10) gehalten ist, der in den Laserbearbeitungskopf einsetzbar ist.

## Claims

1. A laser machining head for machining a workpiece with a laser beam, comprising a bracket (11) and a beam-shaping optical system (15), which is mounted on the bracket (11) such that it can be displaced in the longitudinal direction of the laser beam, **characterized by** a belt drive (33) for displacing the optical system (15), wherein said belt drive features a belt drum (20) that is rotatably mounted on the bracket (11) and can be driven by a motor (19), and wherein the ratio between the belt thickness and the belt drum radius is smaller than 0.05.

2. The laser machining head according to claim 1, **characterized in that** the motor (19) is a brushless d.c. motor or a stepping motor.

3. The laser machining head according to claim 1 or 2, **characterized in that** the ratio between the belt thickness and the belt drum radius is smaller than 0.03, particularly smaller than 0.01.

4. The laser machining head according to claim 1, 2 or 3, **characterized in that**
- the optical system (15) is held on a slide, which is mounted on the bracket (11) such that it can be displaced in the longitudinal direction of the laser beam and has two ends that are spaced apart from one another in the moving direction,
- a first belt (23) is fastened on one end of the slide (14) with one end and wrapped around and fastened on the belt drum (20) with its other end, and a second belt (24) is fastened on the other end of the slide (14) with one end and wrapped around and fastened on the belt drum (20) with its other end.

5. The laser machining head according to claim 4, **characterized in that** the first and the second belt (23, 24) are wrapped around the belt drum (20) adjacent to one another referred to the axial direction of the drum.

6. The laser machining head according to claim 4 or 5, **characterized in that** the first belt (23) is arranged between two seconds belts (24).

7. The laser machining head according to claim 6, **characterized in that** the sum of the widths of the two seconds belts (24) is greater than or equal to the width of the first belt (23).

8. The laser machining head according to claim 6 or 7, **characterized in that** the two seconds belts (24) have the same width.

9. The laser machining head according to one of claims 1-8, **characterized in that** the first and second belts (23, 24) have the same thickness, which lies in the range between 0.1 mm and 0.01 mm, preferably between 0.08 mm and 0.02 mm, particularly between 0.06 mm and 0.04 mm.

10. The laser machining head according to one of the preceding claims, **characterized in that** the first and second belts (23, 24) consist of steel, particularly spring steel or the like.

11. The laser machining head according to one of the preceding claims, **characterized in that** the first and second belts (23, 24) are realized in the form of first and second belt sections (23', 24') of a one-piece belt (33).

12. The laser machining head according to one of the preceding claims, **characterized in that** the bracket (11) for mounting the optical system (15), which can be displaced in the longitudinal direction of the laser beam, is held on an insert (10) that can be inserted into the laser machining head.

## Revendications

1. Tête d'usinage à laser pour l'usinage d'une pièce à oeuvrer avec un faisceau laser, comprenant une monture (11), une optique de mise en forme de faisceau (15), qui est montée sur la monture (11) avec possibilité de déplacement dans la direction longitudinale du faisceau laser,
**caractérisée par** un entraînement à bande (33) pour le déplacement de l'optique (15), lequel entraînement comprend un tambour à bande (20) monté en rotation sur la monture (11) et susceptible d'être entraîné par un moteur (19), dans laquelle le rapport de l'épaisseur de la bande sur le rayon du tambour à bande est inférieur à 0,05.

2. Tête d'usinage à laser selon la revendication 1, **caractérisée en ce que** le moteur (19) est un moteur à courant continu sans balais ou un moteur pas à pas.

3. Tête d'usinage à laser selon la revendication 1 ou 2, **caractérisée en ce que** le rapport de l'épaisseur de la bande sur le rayon du tambour à bande est inférieur à 0,03 et en particulier inférieur à 0,01.

4. Tête d'usinage à laser selon la revendication 1, 2 ou 3, **caractérisée en ce que**
- l'optique (15) et retenue sur un chariot monté sur la monture (11) avec possibilité de déplacement en direction longitudinale du faisceau laser, le lequel chariot comportant deux extrémités écartées l'une de l'autre dans la direction de déplacement,
- une première bande (23) est fixée avec l'une de ses extrémités à l'une des extrémités du chariot (14) et est enroulée avec son autre extrémité autour du tambour à bande (20) et est fixée à celui-ci, et une seconde bande (24) est fixée avec l'une de ses extrémités sur l'autre extrémité du chariot (14) et est enroulée avec son autre extrémité autour du tambour à bande (20) et est fixée à celui-ci.

5. Tête d'usinage à laser selon la revendication 4, **caractérisée en ce que** la première et la seconde bande (23, 24) sont enroulées, vues en direction axiale du tambour, l'une à côté de l'autre autour du tambour à bande (20).

6. Tête d'usinage à laser selon la revendication 4 ou 5, **caractérisée en ce qu'**une première bande (23) est agencée entre deux secondes bandes (24).

7. Tête d'usinage à laser selon la revendication 6, **caractérisée en ce que** la somme des largeurs des deux secondes bandes (24) est égale ou supérieure à la largeur de la première bande (23).

8. Tête d'usinage à laser selon la revendication 6 ou 7, **caractérisée en ce que** les deux secondes bandes (24) ont la même largeur.

9. Tête d'usinage à laser selon l'une des revendications 1 à 8, **caractérisée en ce que** les premières et les secondes bandes (23, 24) ont la même épaisseur, qui est dans la plage de 0,1 mm à 0,01 mm, de préférence de 0,08 mm à 0,02 mm et en particulier de 0,06 mm à 0,04 mm.

10. Tête d'usinage à laser selon l'une des revendications précédentes, **caractérisée en ce que** les premières et les secondes bandes (23, 24) sont en acier, en particulier en acier-ressort ou similaire.

11. Tête d'usinage à laser selon l'une des revendications précédentes, **caractérisée en ce que** les premières et les secondes bandes (23, 24) sont réalisées sous forme de premiers et de seconds tronçons de bande (23', 24') d'une bande d'un seul tenant (33).

12. Tête d'usinage à laser selon l'une des revendications précédentes, **caractérisée en ce que** la monture (11) pour le montage de l'optique (15) déplaçable en direction longitudinale du faisceau laser est retenue sur un insert (10) qui est susceptible d'être mis en place dans la tête d'usinage à laser.
